# EUROPÄISCHE PATENTSCHRIFT

(11) **EP 1 374 562 B1**
(45) Veröffentlichungstag und Bekanntmachung des Hinweises auf die Patenterteilung: **05.01.2011**
(21) Anmeldenummer: 02727463.8
(22) Anmeldetag: 22.03.2002
(51) Int. Cl.: H04N 3/36

(54) **EINRICHTUNG ZUM ABTASTEN VON FILMEN**
DEVICE FOR SCANNING FILMS
DISPOSITIF DE BALAYAGE DE FILMS

(30) Priorität: 28.03.2001 DE 10115342
(43) Veröffentlichungstag der Anmeldung: 02.01.2004
(73) Patentinhaber: Dft Digital Film Technology Holding GmbH, 64331 Weiterstadt (DE)
(72) Erfinder: STEINEBACH, Wolfgang, 56414 Salz (DE)
(74) Vertreter: König, Gregor Sebastian
(86) Internationale Anmeldenummer: PCT/EP2002/003254
(87) Internationale Veröffentlichungsnummer: WO 2002/078323

(56) Entgegenhaltungen:
- EP-A- 0 527 563
- EP-A- 0 809 395
- GB-A- 2 145 899
- US-A- 4 703 365
- PATENT ABSTRACTS OF JAPAN vol. 1995, no. 07, 31. August 1995 (1995-08-31) -& JP 07 095473 A (SONY CORP), 7. April 1995 (1995-04-07)

## Beschreibung

Die Erfindung betrifft eine Einrichtung zum Abtasten von Filmen unter Verwendung mindestens eines Sensors mit diskreten lichtempfindlichen Elementen.

Einrichtungen zum Abtasten von Filmen, meist Filmabtaster genannt, dienen zur Erzeugung von Videosignalen einschließlich der zugehörigen Audiosignale beim Tonfilm, um die auf dem Film gespeicherten Bilder und Töne über das Fernsehen zu senden oder auf elektromagnetischen oder elektronischen Speichermedien zu speichern. Als Sensoren für Filmabtaster haben sich in den letzten Jahrzehnten CCD-Sensoren bewährt, die jedoch bezüglich ihrer Auflösung und Geschwindigkeit an Grenzen geraten. Um eine Bildauflösung von circa 4000 x 3000 Bildelementen (Pixel) bei 30 Bildern pro Sekunde zu verwirklichen, müssten beispielsweise sechs Kanäle pro Farbauszug mit 670 Pixeln je Kanal bei 60 MHz-Pixelrate erzeugt und verarbeitet werden. Ferner sind CCD-Sensoren relativ unflexibel, u.a. im Hinblick auf Veränderungen der Auflösung. Vor dem Beginn einer neuen Zeile muss in der Regel immer eine komplette Zeile ausgelesen werden.

Aus der EP 809 395 A ist ein wahlfrei adressierbarer Sensor in der Art bekannt, die in der erfindungsgemäßen Einrichtung verwendet wird.

Die JP 07 095473 A beschreibt eine Einrichtung zum Lesen von Bildinformationen von fotografierten Filmen und zu deren Umwandeln in Videosignale. Es werden lediglich die Bildinformationen genutzt.

Aufgabe der vorliegenden Erfindung ist es, eine Einrichtung zur Abtastung von Filmen vorzuschlagen, welche in einfacher Weise an die geometrischen Verhältnisse des jeweils abzutastenden Films angepasst werden kann und dabei die bei den bekannten Filmabtastern vorhandenen Qualitätsmerkmale, wie beispielsweise Auflösung und Störabstand, mindestens erreicht.

Diese Aufgabe wird erfindungsgemäß dadurch gelöst, dass die lichtempfindlichen Elemente des Sensors zum Auslesen von Videosignalen wahlfrei adressierbar sind, dass eine Anordnung zu einer an die Abbildung des Films auf dem Sensor angepasste Adressierung vorgesehen ist, dass der Film mit der gesamten Breite auf dem Sensor abgebildet ist und dass Gruppen von Bildelementen, auf die jeweils das Filmbild, die Perforation und gegebenenfalls eine Licht-Tonspur abgebildet wird, getrennt adressiert und ausgelesen werden.

Der wahlfreie Zugriff auf die lichtempfindlichen Elemente und damit auf beliebige Bildelemente (Pixel) des abgetasteten Films ermöglicht es, die abgetastete Bildbreite dynamisch den Erfordernissen anzupassen. Der Film wird mit der gesamten Breite auf dem Sensor abgebildet. Gruppen von Bildelementen, auf die jeweils das Filmbild, die Perforation und gegebenenfalls eine Licht-Tonspur abgebildet wird, werden getrennt adressiert und ausgelesen. Dadurch können mit einem Sensor außer der Auswertung der Filmbilder und der gegebenenfalls vorhandenen optischen Tonspur auch Signale zur Bildstandsverbesserung durch die Abtastung der Perforation gewonnen werden. Die aktive Bildbreite des Films, das heißt der eigentliche Bildbereich kann frei wählbar ausgelesen werden.

Bei fest vorgegebenen Datenraten können daher kleinere Bildausschnitte (weniger Pixel) mit hoher Zeilenfrequenz und somit auch mit hoher Bildwiederholrate oder größere Bildausschnitte (mehr Pixel) bei niedriger Zeilenfrequenz und daher entsprechend niedriger Bildwiederholrate ausgelesen werden. Damit wird es möglich, den zu verarbeitenden Bereich dem Filmformat anzupassen und nur den interessierenden Bereich auszulesen. Derartige Filmformate sind beispielsweise: "Full Aperture 35 mm, Academy 35 mm, S 16 mm und 16 mm.

Die Abtastung der gesamten Filmbreite kann beispielsweise mit 6000 Pixeln erfolgen. Dies hat den Vorteil, dass die gesamte Information des Films einschließlich der Position der Perforationslöcher und der eventuell vorhandenen Licht- Tonspur vorhanden ist und bei Bedarf zu einer weiteren Signalverarbeitung angeführt werden kann. Dazu kann eine Sensorstruktur entworfen werden, welche parallel mehrere Ausgänge zur Verfügung stellt, um diese verschiedenen Processing-Stufen, zum Beispiel Videoverarbeitung, Audioverarbeitung oder Bildstandskorrektur, zuzuführen.

Eine vorteilhafte Ausgestaltung der Erfindung besteht darin, dass der Sensor ein CMOS-Sensor ist. Diese Sensoren sind besonders gut für hohe Auflösungen und für eine Integration der zur wahlfreien Adressierung erforderlichen Schaltungen auf dem Chip geeignet. CMOS-Sensoren sind beispielsweise beschrieben in Mansoorian B. et al. "250 mW, 60 Frames-per-Second, 1280Hx720V Pixel CMOS Digital Image Sensor (PB-0720)", Vortrag auf der International Solid-State Circuits Conference, February 17, 1999, in EP 0 905 787 A2 und in WO98/56170.

Bei der erfindungsgemäßen Einrichtung kann vorgesehen sein, dass der Sensor ein Zeilensensor ist. Dazu können die für Filmabtaster mit CCD-Zeilensenoren bekannten kontinuierlichen Filmlaufwerke verwendet werden, wobei sich durch die gemeinsame Abtastung von Bild, Ton und Perforation gemäß der obengenannten Weiterbildung erhebliche Vereinfachungen ergeben.

Es ist im Rahmen der Erfindung jedoch auch möglich, als Sensor einen Flächensensor zu verwenden. Dafür sind geeignete Laufwerke mit intermetierendem Filmtransport bekannt.

In beiden Fällen ist es im Rahmen der Erfindung möglich, einen Sensor für drei Farbauszüge oder in Verbindung mit einem Farbteiler drei Sensoren für jeweils einen Farbauszug zu verwenden.

Eine vorteilhafte Ausgestaltung der erfindungsgemäßen Einrichtung besteht darin, dass aus den verschiedenen Gruppen von lichtempfindlichen Elementen die Signale in eine Videoverarbeitungsschaltung, in eine Audioverarbeitungsschaltung und in eine Schaltung zur Auswertung der Perforation einlesbar sind. Vorzugsweise ist dabei vorgesehen, dass die Videoverarbeitungsschaltung, die Audioverarbeitungsschaltung und die Schaltung zur Auswertung der Perforation auf einem Chip mit dem Sensor angeordnet sind. Ein oder mehrere Analog/Digital-Wandler können ebenfalls auf dem Chip angeordnet werden. Neben einer Vereinfachung und Verbilligung durch einen hohen Integrationsgrad wird auch die mögliche Geschwindigkeit bei der Signalverarbeitung dadurch erhöht.

Durch den wahlfreien Zugriff auf die einzelnen Pixel sind weitere Verbesserungen der bisherigen Filmabtaster möglich. So kann beispielsweise eine Einrichtung zur korrelierten Doppelabtastung vorgesehen sein. Vorzugsweise ist die Einrichtung zur korrelierten Doppelabtastung auf dem Chip angeordnet.

Ausführungsbeispiele der Erfindung sind in der Zeichnung anhand mehrerer Figuren dargestellt und in der nachfolgenden Beschreibung näher erläutert. Es zeigt:
- Fig. 1: eine schematische Darstellung einer erfindungsgemäßen Einrichtung,
- Fig. 2: die wesentlichen Teile eines Filmabtasters mit drei Sensoren und
- Fig. 3: die wesentlichen Teile eines Filmabtasters mit einem Dreifarben-Sensor jeweils in stark vereinfachter Darstellung.

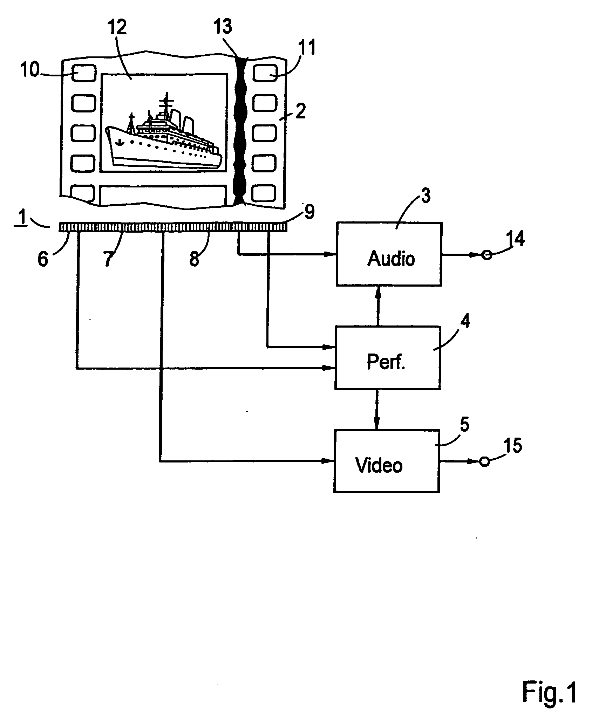

Fig. 1 zeigt lediglich die zum Verständnis der Erfindung erforderlichen Teile, nämlichen einen Zeilensensor 1, einen Abschnitt eines Films 2, eine Audioverarbeitungsschaltung 3, eine Schaltung zur Auswertung der Perforation 4 und eine Videoverarbeitungsschaltung 5. Der Sensor 1 ist intern, das heißt auf einem einzigen Chip, mit Ansteuer- und Ausleseschaltungen versehen, so dass Signale aus Bereichen 6, 7, 8, 9 über jeweils einen Ausgang ausgelesen werden. Insgesamt hat der Zeilensensor 1 etwa 6000 lichtempfindliche Elemente, die durch eine senkrechte Schraffur lediglich angedeutet sind.

Auf die Bereiche 6 und 9 wird die Perforation 10, 11 des Films 2 abgebildet. Die Abbildung der Filmbilder 12 erfolgt auf den Bereich 7, während der Bereich 8 zur Abtastung der Tonspur 13 dient.

Die Auswertung der durch die Abtastung der Perforation 10, 11 gewonnenen Signale in der Schaltung 4 erfolgt derart, dass Signale abgeleitet werden, welche den Differenzen des tatsächlichen Filmlaufs vom idealen Filmlauf in horizontaler und vertikaler Richtung entsprechen und der Audioverarbeitungsschaltung 3 und der Videoverarbeitungsschaltung 5 zur Signalkorrektur zugeführt werden.

Mit Hilfe des Bereichs 8 werden Signale erzeugt, bei denen die Anzahl der "schwarzen" Pixel der Breite der Tonspur 13 entspricht. Aus diesen Signalen wird durch entsprechende Umcodierung ein digitales Audiosignal erzeugt, das - gegebenenfalls nach einer Laufzeitkorrektur mit Hilfe der aus der Perforation gewonnenen Signale - einem Ausgang 14 entnommen werden kann. Die in ähnlicher Weise korrigierten Videosignale können einem Ausgang 15 entnommen werden.

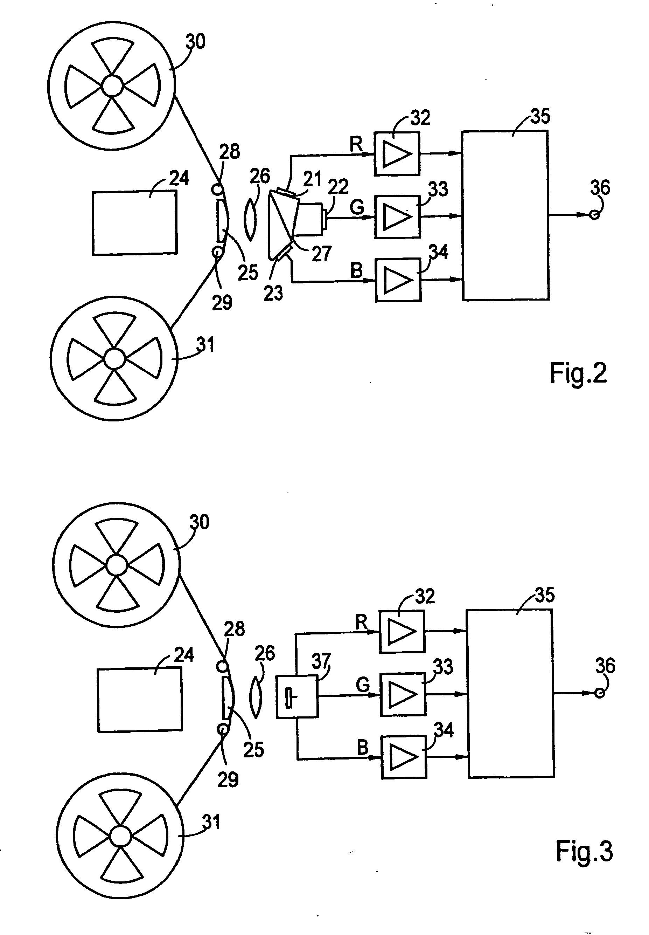

Fig. 2 zeigt einen Filmabtaster mit drei Sensoren 21, 22, 23. Von einer Beleuchtungseinrichtung 24 wird der an einem Filmfenster 25 vorbeigeführte Film belichtet. Der Film wird dabei von einer Abwickelspule 30 über eine erste Rolle 28, das Filmfenster 25 und eine zweite Rolle 29 zu einer Aufwickelspule 31 transportiert.

Die jeweilige Zeile des Films wird mit Hilfe eines Objektivs 26 auf die Sensoren 21, 22, 23 abgebildet, wobei ein Farbteiler 27 den Sensoren jeweils die Farbanteile zuweist, die als entsprechende Signale R, G, B über Verstärker 32, 33, 34 einer Videoverarbeitungsschaltung 35 zugeführt werden, an deren Ausgang 36 in einem geeigneten Format die gesamte Farbvideoinformation entnommen werden kann.

Im Gegensatz zu dem Filmabtaster nach Fig. 2 weist der Filmabtaster nach Fig. 3 einen Dreifarben-Sensor 37 auf, der drei Farbsignale R, G, B erzeugt. Im übrigen gleicht der Filmabtaster nach Fig. 3 demjenigen nach Fig. 2.

## Patentansprüche

1. Einrichtung zum Abtasten von Filmen unter Verwendung mindestens eines Sensors mit diskreten lichtempfindlichen Elementen,
**dadurch gekennzeichnet, dass**
die lichtempfindlichen Elemente des Sensors (1, 21, 22, 23, 37) zum Auslesen von Videosignalen wahlfrei adressierbar sind,
dass eine Anordnung zu einer an die Abbildung des Films (2) auf dem Sensor (1, 21, 22, 23, 37) angepasste Adressierung vorgesehen ist,
dass der Film (2) mit der gesamten Breite auf dem Sensor (1, 21, 22, 23, 37) abgebildet ist
und dass Gruppen von Bildelementen, auf die jeweils das Filmbild (12), die Perforation (10, 11) und gegebenenfalls eine Licht-Tonspur (13) abgebildet wird, getrennt adressiert und ausgelesen werden.

2. Einrichtung nach Anspruch 1, **dadurch gekennzeichnet, dass** der Sensor (1, 21, 22, 23, 37) ein CMOS-Sensor ist.

3. Einrichtung nach Anspruch 1 oder 2, **dadurch gekennzeichnet, dass** der Sensor (1, 21, 22, 23, 37) ein Zeilensensor ist.

4. Einrichtung nach Anspruch 1 oder 2, **dadurch gekennzeichnet, dass** der Sensor (1, 21, 22, 23, 37) ein Flächensensor ist.

5. Einrichtung nach Anspruch 1, **dadurch gekennzeichnet, dass** aus verschiedenen Gruppen von lichtempfindlichen Elementen die Signale in eine Videoverarbeitungsschaltung (5), in eine Audioverarbeitungsschaltung (3) und in eine Schaltung (4) zur Auswertung der Perforation einlesbar sind.

6. Einrichtung nach Anspruch 5, **dadurch gekennzeichnet, dass** die Videoverarbeitungsschaltung (5), die Audioverarbeitungsschaltung (3) und die Schaltung (4) zur Auswertung der Perforation auf einem Chip mit dem Sensor angeordnet sind.

7. Einrichtung nach einem der Ansprüche 1 bis 6, **dadurch gekennzeichnet, dass** ferner eine Einrichtung zur korrelierten Doppelabtastung vorgesehen ist.

8. Einrichtung nach Anspruch 7, **dadurch gekennzeichnet, dass** die Einrichtung zur korrelierten Doppelabtastung auf dem Chip angeordnet ist.

## Claims

1. Device for scanning films using at least one sensor with discrete light-sensitive elements,
**characterised in that**
the light-sensitive elements of the sensor (1, 21, 22, 23, 37) can be arbitrarily addressed to read video signals,
**in that** an apparatus is provided for addressing adapted to the displaying of the film (2) on the sensor (1, 21, 22, 23, 37),
**in that** the film (2) is displayed with the entire width on the sensor (1, 21, 22, 23, 37),
and **in that** groups of image elements, on which the film image (12), the perforation (10, 11) and where applicable an optical sound track (13) are each displayed, are addressed and read separately.

2. Device according to claim 1, **characterised in that** the sensor (1, 21, 22, 23, 37) is a CMOS sensor.

3. Device according to claim 1 or 2, **characterised in that** the sensor (1, 21, 22, 23, 37) is a line sensor.

4. Device according to claim 1 or 2, **characterised in that** the sensor (1, 21, 22, 23, 37) is an area sensor.

5. Device according to claim 1, **characterised in that**, from various groups of light-sensitive elements, the signals can be read into a video processing circuit (5), into an audio processing circuit (3) and into a circuit (4) for evaluation of the perforations.

6. Device according to claim 5, **characterised in that** the video processing circuit (5), the audio processing circuit (3) and the circuit (4) for evaluation of the perforations are arranged on a chip with the sensor.

7. Device according to any of claims 1 to 6, **characterised in that** furthermore a device for correlated double scanning is provided.

8. Device according to claim 7, **characterised in that** the device for correlated double scanning is arranged on the chip.

## Revendications

1. Dispositif de balayage de films faisant appel à au moins un capteur comprenant des éléments photosensibles discrets,
**caractérisé en ce**
**que** les éléments photosensibles du capteur (1, 21, 22, 23, 37) peuvent être adressés au choix pour lire des signaux vidéo,
**qu'**il est prévu un système pour un adressage adapté à la reproduction du film (2) sur le capteur (1, 21, 22, 23, 37),
**que** le film (2) est reproduit dans toute sa largeur sur le capteur (1, 21, 22, 23, 37) et que des groupes d'éléments d'image, sur lesquels l'image du film (12), la perforation (10, 11) et éventuellement une piste de son optique (13) sont reproduites, sont adressés et lus séparément.

2. Dispositif selon la revendication 1, **caractérisé en ce que** le capteur (1, 21, 22, 23, 37) est un capteur CMOS.

3. Dispositif selon la revendication 1 ou 2, **caractérisé en ce que** le capteur (1, 21, 22, 23, 37) est un capteur linéaire.

4. Dispositif selon la revendication 1 ou 2, **caractérisé en ce que** le capteur (1, 21, 22, 23, 37) est un capteur surfacique.

5. Dispositif selon la revendication 1, **caractérisé en ce que** les signaux provenant des différents groupes d'éléments photosensibles peuvent être lus dans un circuit de traitement vidéo (5), dans un circuit de traitement audio (3) et dans un circuit (4) d'évaluation de la perforation.

6. Dispositif selon la revendication 5, **caractérisé en ce que** le circuit de traitement vidéo (5), le circuit de traitement audio (3) et le circuit (4) d'évaluation de la perforation sont disposés sur une puce avec le capteur.

7. Dispositif selon une des revendications 1 à 6, **caractérisé en ce qu'**il est prévu en plus un dispositif de double balayage corrélé.

8. Dispositif selon la revendication 7, **caractérisé en ce que** le dispositif de double balayage corrélé est disposé sur la puce.
